# EUROPEAN PATENT SPECIFICATION

(11) **EP 2 865 201 B1**
(45) Date of publication and mention of the grant of the patent: **30.11.2016**
(21) Application number: 13732345.7
(22) Date of filing: 18.06.2013
(51) Int. Cl.: H04W 64/00, H04W 4/02, H04W 4/22, H04W 76/00, H04W 88/04, H04W 88/06, H04W 92/18, H04W 92/20

(54) **MOBILE SYNCHRONIZATION TO AID IN EMERGENCY SITUATIONS**
MOBILE SYNCHRONISATION ZUR HILFE IN NOTSITUATIONEN
SYNCHRONISATION DE DISPOSITIFS MOBILES POUR AIDER DANS DES SITUATIONS D'URGENCE

(30) Priority: 22.06.2012 US 201213531202
(43) Date of publication of application: 29.04.2015
(73) Proprietor: Qualcomm Incorporated, San Diego, CA 92121 (US)
(72) Inventor: MCDONALD, Cameron A., San Diego California 92121 (US); BROWN, Craig M., San Diego California 92121 (US); FLANAGAN, Jessica M., San Diego California 92121 (US)
(74) Representative: Loveless, Ian Mark
(86) International application number: PCT/US2013/046234
(87) International publication number: WO 2013/192134

(56) References cited:
- US-A1- 2010 279 647
- US-A1- 2012 158 289
- US-B1- 6 580 981

## Description

### BACKGROUND OF THE INVENTION

The invention relates generally to the field of communication systems that provide location information. More particularly, the present invention relates in one embodiment to a system for retrieving location information of a mobile device associated with an individual.

Mobile devices such as cell phones and smart phones have become an essential accessory. People depend on their mobile devices for both trivial tasks such as finding the nearest grocery store and crucial tasks such as contacting the emergency services in times of emergency. Regardless of our dependency on mobile devices, there are still many areas that have low or no connectivity.

It is an unfortunate but common occurance for people to go astray or get lost in areas of low or no cell phone coverage while performing activities such as hiking, climbing and other activities in the wilderness. The emergency response teams are left to traditional techniques and devices for locating the lost person. However, these techniques by themselves are not always successful or at least may take a long time in locating the lost person, jeopardizing the person's safety. For instance, in snowy and stormy conditions, the tracks for the lost person are covered fast concealing the whereabouts of the person. In such emergency situations, certain information such as location and travel history about a person may be useful to emergency services. In some emergency situations, there may be no cellular coverage, making it difficult to provide location data such as location coordinates to an emergency response entity for providing help.

Many mobile devices are equipped with a Global Position System (GPS) technology element. GPS technology determines positional information of a GPS receiver such as a mobile device based on measuring signal transfer times between satellites having known positions and the GPS receiver. The signal transfer time of a signal is proportional to a distance of a respective satellite from the GPS receiver. Consequently, the distance between the satellite and the GPS receiver can be converted, utilizing signal propagation velocity, into a respective signal transfer time. The positional information of the OPS receiver is calculated based on trilateration and distance calculations from a number of satellites (typically four satellites). When there is cellular coverage, the information obtained by a OPS receiver can be communicated to the cellular network.

Even in areas of low or no cellular coverage a mobile device may have a line-of-sight communication with OPS satellites and can deduce information about its own location. However, without cellular coverage the user of the mobile device may not have a means of communicating location coordinates to an emergency response agency.

US 6 580 981 is directed to a system and method of peer-to-peer and peer-to-peer-to-infrastructure store-and-forward communication capabilities

Embodiments of the invention address these and other problems.

### BRIEF SUMMARY OF THE INVENTION

Techniques for transferring device-related content between mobile devices in low coverage areas are provided. In emergency situations, various information (e.g., current location, location history, time-stamp, sensor measurements and other device-related or network-related information) may be useful to emergency services. However, this information may be difficult to provide to an external server in areas of low or no coverage. Thus, provided techniques enable mobile devices to communicate with each other in low coverage areas to build up a history of information that may be useful in an emergency situation.

In low or no coverage areas, a mobile device utilizes short range wireless transfer mechanisms (e.g., Wi-Fi, Bluetooth, etc.) to transfer data directly to one or more other nearby devices. Thus, it is not necessary for the mobile device to first transmit the data to abase transmission station or otherwise pass the data through a serving network, but rather the data may be directly transmitted to or received from another mobile device. The data may be encrypted and authenticated to ensure user privacy. Upon reaching a location with good coverage, a mobile device uploads information it has collected to a predetermined server or other receiver, thereby enabling information about devices in low or no coverage areas to reach the network. This transfer may be automated such that the device automatically provides collected data to the predetermined receiver upon identifying a sufficient improvement in coverage.

Collected information can be submitted to an emergency response entity, such as a Public Safety Answering Point (PSAP) or the like, based on various conditions. For instance, upon initiating a transmitting mode at a mobile device as described above, information relating to the mobile device can be released to an emergency response entity if the device fails to provide a "check-in" message within a predetermined amount of time. Submission of data to an emergency response entity could also be manually triggered.

An example method for transmitting data according to embodiments of the invention using a device may include detecting a mobile apparatus within a communicable range of a device, determining whether a transmission mode has been triggered in the device, wherein the transmission mode is triggered if an extent of an available communication coverage is less than a threshold and in response to the triggering of the transmission mode, transmitting data comprising a location from the device to the mobile apparatus, for forwarding the data to a base transmission station. The location may include a current location of the device or a location of a second mobile apparatus that was previously received by the device. Exemplary data may include device-related data such as location coordinates, time-stamp, location history, battery charge level, sensor measurements or data relating to observed network parameters at the device. Sensor measurements may include, but are not limited to data from one or more accelerometers or/and gyroscopes, and may help determine a movement of the device and/or predict a future position of the device. The device may transmit to the mobile apparatus using a short-range wireless communication technology. In some embodiments, the data is encrypted prior to transmitting to the mobile apparatus.

An example method for listening to data according to embodiments of the invention using a device may include detecting a mobile apparatus within a communicable range of a device, determining whether a listening mode has been triggered in the apparatus, wherein the listening mode is triggered if an extent of an available communication coverage is less than a threshold, and in response to the triggering of the listening mode, listening at the apparatus for data from the mobile device comprising a location , for forwarding the data to a base transmission station. The location may include a current location of the device or a location of a second mobile apparatus that was previously received by the device. Exemplary data may include device-related data such as location coordinates, time-stamp, location history, battery charge level, sensor measurements or data relating to observed network parameters at the device. Sensor measurements may include, but are not limited to data from one or more accelerometers or gyroscopes, and may help determine a movement of the device and/or predict a future position of the device. In some embodiments, listening includes receiving the data from the mobile device; and storing data in a collected data store. The method may further include identifying entry into an area having an extent of communication coverage that is higher than the threshold, and transmitting data stored by the collected data store to a server in response to the identified entry. In some implementations, the mobile apparatus may receive data from the mobile device using a short-range wireless communication technology.

An example method for a communicating with the mobile device may include receiving at least one communication comprising device-related data associated with a first mobile device, wherein the at least one communication is received from at least one second mobile device, and estimating a location of the first mobile device using the device-related data associated with the first mobile device. In one implementation, estimating the location of the first mobile device comprises deriving a vector indicative of a movement of the first mobile device based at least in part on the at least one communication comprising device-related data. In another implementation, estimating the location of the first mobile device comprises projecting the location of the device by determining a movement of the first mobile device using a plurality of location coordinates along with a time-stamp associated with each location coordinate from at least the device-related data associated with the first mobile device. In some embodiments, the sever implementing the above method transmits the location to an emergency response entity. The transmission may be triggered by determining an elapsed time since a most recent communication with the first mobile device is greater than a first threshold. The communication may be received at a server of a network while the first mobile device is out of communication with the network.

An example device implementing the system may include a transceiver configured to receive at least a first signal from a mobile apparatus, and a processor configured to detect when the mobile apparatus is within a communicable range based on the first signal and determine whether a device synchronization mode has been triggered, wherein the device synchronization mode is triggered if an extent of an available communication coverage may be less than a threshold, and wherein the transceiver may be configured to synchronize, in response to the triggering of the device synchronization mode, data comprising a location of the mobile apparatus, for forwarding the data to a base transmission station.

In one aspect of the exemplary device, the synchronization mode embodied by the device includes a transmission mode, wherein the transceiver is configured to transmit the data in response to triggering of the transmission mode. The data may further include but is not limited to one or more of location coordinates, time-stamp, location history, battery charge level, and data relating to observed network parameters at the device. The transceiver may be configured to transmit the data to the mobile apparatus using a short-range wireless communication technology. In some implementations, the data may be encrypted by the device prior to being transmitted to the mobile apparatus.

In another aspect of the exemplary device, the synchronization mode embodied by the device includes a listening mode, wherein the transceiver is configured to receive the data in response to the triggering of the listening mode. The data may further include but is not limited to one or more of location coordinates, time-stamp, location history, battery charge level, and data relating to observed network parameters at the device. The device may comprise a collected data store configured to store the data. The processor of the device may be further configured to identify entry into an area having an extent of communication coverage that is higher than the threshold, and the transceiver may be further configured to transmit data stored by the collected data store to a server in response to the identified entry. In some implementations, the transceiver is configured to receive the data from the mobile apparatus using a short-range wireless communication technology.

In one exemplary embodiment, the server may be implemented as a device that includes a transceiver for receiving at least one communication comprising device-related data associated with a first mobile device, wherein the at least one communication is received from at least one second mobile device, and a processor for estimating a location of the first mobile device using the device-related data associated with the first mobile device. In one implementation, estimating the location of the first mobile device may include deriving a vector indicative of a movement of the first mobile device based at least in part on the at least one communication comprising device-related data. In another implementation, estimating the location of the first mobile device comprises projecting the location of the device by determining a movement of the first mobile device using a plurality of location coordinates along with a time-stamp associated with each location coordinate from at least the device-related data associated with the first mobile device. The device performing embodiments of the invention may further transmit the location to an emergency response entity. The processor may further determine an elapsed time since a most recent communication with the first mobile device is greater than a first threshold, wherein the transmitting is triggered by the determination that the elapsed time is greater than the first threshold. In one exemplary situation, the at least one communication is received at a server of a network while the first mobile device is out of communication with the network.

An example non-transitory computer readable storage medium coupled to a processor, wherein the non-transitory computer readable storage medium comprises a computer program executable by the processor for implementing a method may detect when a mobile apparatus within a communicable range of the device, may determine whether a device synchronization mode has been triggered, wherein the device synchronization mode is triggered if an extent of an available communication coverage is less than a threshold, and in response to the triggering of the device synchronization mode, may synchronize data comprising a location with the mobile apparatus, for forwarding the data to a base transmission station.

Furthermore, an exemplary non-transitory computer readable storage medium coupled to a processor, wherein the non-transitory computer readable storage medium comprises a computer program executable by the processor for implementing a method may receive at least one communication comprising device-related data associated with a first mobile device, wherein the at least one communication is received from at least one second mobile device, and may estimate a location of the first mobile device using the device-related data associated with the first mobile device.

An example apparatus performing a method for synchronizing data, the method may include a means for detecting a mobile apparatus within a communicable range of a device, a means for determining whether a device synchronization mode has been triggered, wherein the device synchronization mode is triggered if an extent of an available communication coverage is less than a threshold, and in response to the triggering of the device synchronization mode, a means for synchronizing data comprising a location with the mobile apparatus, for forwarding the data to a base transmission station.

An example apparatus performing a method for determining location of a mobile device, the method may include a means for receiving at least one communication comprising device-related data associated with a first mobile device, wherein the at least one communication is received from at least one second mobile device, and a means for estimating a location of the first mobile device using the device-related data associated with the first mobile device.

An example mobile device may include a transmission module for transmitting device-related data comprising device location to another mobile device, for forwarding the device-related data to a base transmission station, wherein the transmission may be triggered if an extent of an available communication coverage is less than a threshold, and a listening module for listening for device-related data comprising device location from another mobile device, for forwarding the device-related data to a base transmission station, wherein the listening may be triggered if an extent of an available communication coverage is less than a threshold. According to embodiments of the invention, a location determination system comprising the mobile device may further comprise a base transmission station including a receiving module for receiving a plurality of communications from the another mobile device, each communication of the plurality of communications comprising device-related data associated with the mobile device, and a device location module for determining a vector indicative of a movement of the mobile device based at least in part on the device-related data in the plurality of communications.

The foregoing has outlined rather broadly the features and technical advantages of examples according to disclosure in order that the detailed description that follows can be better understood. Additional features and advantages will be described hereinafter. The conception and specific examples disclosed can be readily utilized as a basis for modifying or designing other structures for carrying out the same purposes of the present disclosure. Such equivalent constructions do not depart from the spirit and scope of the appended claims. Features which are believed to be characteristic of the concepts disclosed herein, both as to their organization and method of operation, together with associated advantages, will be better understood from the following description when considered in connection with the accompanying figures. Each of the figures is provided for the purpose of illustration and description only and not as a definition of the limits of the claims.

### BRIEF DESCRIPTION OF THE DRAWINGS

The following description is provided with reference to the drawings, where like reference numerals are used to refer to like elements throughout. While various details of one or more techniques are described herein, other techniques are also possible. In some instances, structures and devices are shown in block diagram form in order to facilitate describing various techniques.

A further understanding of the nature and advantages of examples provided by the disclosure can be realized by reference to the remaining portions of the specification and the drawings, wherein like reference numerals are used throughout the several drawings to refer to similar components. In some instances, a sub-label is associated with a reference numeral to denote one of multiple similar components. When reference is made to a reference numeral without specification to an existing sub-label, the reference numeral refers to all such similar components.
FIG. 1 is an illustration of a simplified wireless communication system 100 at a first period of time.
FIG. 2 is an illustration of a simplified wireless communication system 100 depicted in FIG. 1 at a later time.
FIG. 3 is a simplified flow diagram, illustrating a method 300 for transmitting information to another mobile device for the purpose of forwarding to the network.
FIG. 4 is a simplified flow diagram, illustrating a method 400 for listening for information from another mobile device.
FIG. 5 is a simplified flow diagram, illustrating a method 500 for transmitting the stored device-related data from FIG. 4 to the network.
FIG. 6 is a simplified flow diagram, illustrating a method 600 for receiving the device-related data from the mobile device.
FIG. 7 is an illustration of a computer system that may be incorporated as part t of the described computerized device

### DETAILED DESCRIPTION OF THE INVENTION

The invention relates generally to the field of communication systems that provide location information. More particularly, the present invention relates in one embodiment to a system for retrieving location information of a mobile device associated with an individual.

Mobile devices such as cell phones and smart phones have become an essential accessory while leaving one's home. As dependent as we have become on the mobile devices, there are still many areas such as the wilderness that have very low or no communications coverage. It is an unfortunate but common occurance for people to go astray or get lost in areas of low or no communication coverage while performing activities such as hiking, climbing and other activities in the wilderness. In such emergency situations, certain information such as location and travel history about a person may be useful to emergency services. In some emergency situations, there may be no coverage, making it difficult to provide this data to an external server.

Even in areas of low or no cellular coverage the mobile devices may have a line-of-sight communication with one or more elements of a Satellite Positioning System (SPS) such as GPS satellites, for example, and can deduce information about their own location. However, without communications coverage the user of a mobile device does not have a means of communicating their location to an emergency response agency.

Techniques for synchronizing content between mobile devices in low coverage areas are provided. In emergency situations, various information (e.g., current location, location history, sensor measurements or other device-related or network-related information) may be useful to emergency services. However, this information may be difficult to provide to an external server in areas of low or no cellular coverage. Thus, provided techniques enable mobile devices to communicate with each other in low coverage areas, for example to build up a history of information that may be useful in an emergency situation.

In low- or no-coverage areas, a mobile device utilizes short range wireless transfer mechanisms (e.g., Wi-Fi, Bluetooth, etc.) to synchronize data directly with one or more other nearby devices. Thus, it is not necessary for the mobile device to first transmit the data to a base transmission station or otherwise pass the data through a serving network, but rather the data may be directly transmitted to or received from another mobile device. The data may be encrypted and authenticated to ensure user privacy. Upon reaching a location with good coverage, a mobile device uploads information it has collected to a predetermined server or other receiver such as a base transmission station, thereby enabling information about devices in low- or no-coverage areas to reach the network. Collected information can be submitted to an emergency response entity, such as a PSAP or the like, based on various conditions. In one embodiment, the network is a cellular coverage network. However, in other embodiments, other means of connecting to the network, such as using Wi-Fi, WiMax, Bluetooth or any other means of coverage or connection to a communication network may be employed in performing embodiments of the invention. Similarly, data may be uploaded when any suitable means of connection is obtained.

As used herein, the term "location coordinates" refer without limitation to any set or partial set of integer, real and/or complex location data or information such as longitudinal, latitudinal, and positional coordinates.

The term "Satellite Positioning System" refers to without limitation any services, methods, or devices that utilize SPS technology that determine a position of a SPS receiver such as a mobile device based on measuring signal transfer times between satellites having known positions and the SPS receiver. Examples of SPS systems include but are not limited to GPS and/or other GNSSs such as GLONASS, etc., or other systems that utilize satellite vehicles for positioning. For example, in a GPS system, the signal transfer time of a signal is proportional to a distance of a respective satellite from the GPS receiver. Consequently, the distance between the satellite and the GPS receiver can be converted, utilizing signal propagation velocity, into a respective signal transfer time. The positional information of the GPS receiver is calculated based on trilateration and distance calculations from a number of satellites (typically four satellites). Other SPS systems may utilize similar mechanisms for determining positional information.

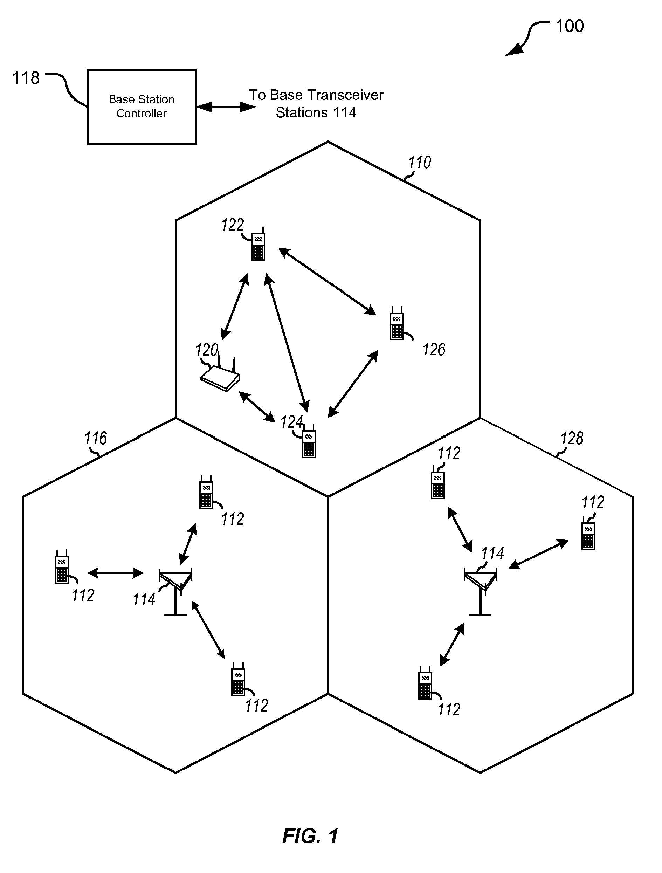

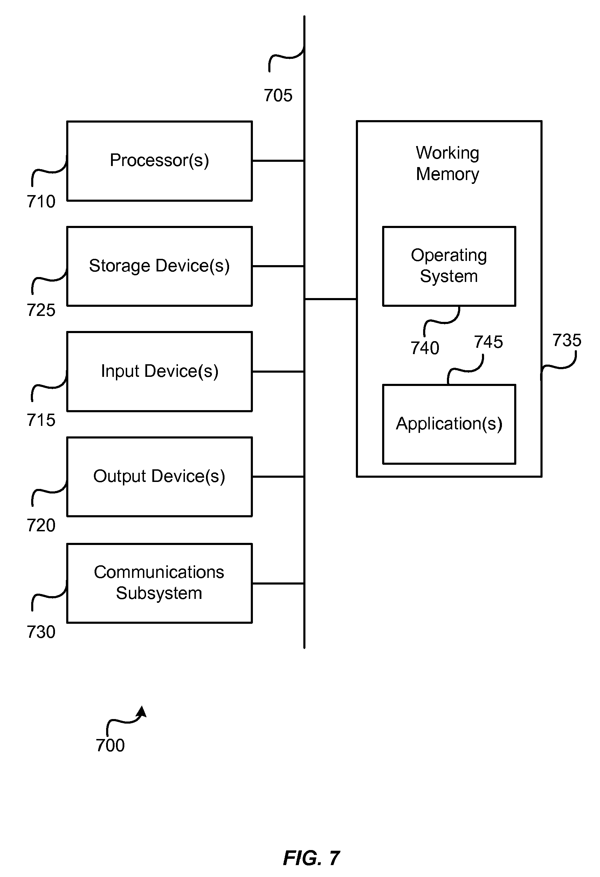

FIG. 1 is an illustration of a simplified and exemplary wireless communication system 100 at a first period of time. The system includes various devices, such as mobile devices 112, 122, 124 and 126, base transceiver stations (BTSs) 114 disposed in cells 110 and 116, and a base station controller (BSC) 118. The system 100 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Synchronous Code Division Multiple Access (TD-SCDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc. Computer system 700 is further discussed in reference to FIG. 7 below, can represent some of the components of a the mobile devices, the BTSs, the BSC, the access nodes and points described in FIG. 1.

The BTSs 114 can wirelessly communicate with the mobile devices 112 via antennas. Each of the BTSs 114 may also be referred to as a base station, an access point, an access node (AN), a Node B, an evolved Node B (eNB), etc. The BTSs 114 are configured to communicate with the mobile devices 112 under the control of the BSC 118 via multiple carriers. Each of the BTSs 114 can provide communication coverage for a respective geographic area, here the respective cells 116. Each of the cells 116 of the BTSs 114 is partitioned into multiple sectors as a function of the base transmission station antennas.

In FIG. 1, area represented by cell 110 does not have a BTS and has low or no cellular coverage. Cell 110 may represent a wilderness region such as a national park, mountain or other locations that are not adequately serviced by cell phone carriers. Therefore, mobile devices 122, 124 and 126 that are located in cell 110 of FIG. 1 have very low or no cellular coverage. However, the mobile devices may be in each other's vicinity and capable of communicating with each other utilizing short range wireless transfer mechanisms such as Wi-Fi, and Bluetooth. Additionally, the mobile devices may be capable of communicating with each other through an access point 120 utilizing short range wireless transfer mechanisms.

In other embodiments, other communication means may be employed for performing aspects of the embodiment. For instance, in one embodiment, Wi-Fi connectivity, Bluetooth connectivity, a two-way communication channel or any other suitable means may be used in communicating between the mobile devices. Also, in some embodiments, the communication between the mobile device and each of the BTSs may occur using any of a plurality of technologies. As described above, cellular may be used. Further, other technologies such as Wi-Fi may be used to connect to a network, for example through the BTSs. The mobile device may connect to the network wirelessly or through a wired connection.

In one embodiment, mobile devices are automatically or manually switched into a listening and transmitting mode upon detecting an area of low or no-coverage, such as region represented by cell 110 in FIG. 1. Mobile device 122, 124 and 126 may utilize short range wireless transfer mechanisms (e.g., Wi-Fi, Bluetooth, etc.) to transfer data directly with one another. Thus, it is not necessary for the mobile devices to first transmit the data to a BTS or otherwise pass the data through a serving network, but rather the data may be directly transmitted to or received from another mobile device. The data may be encrypted and authenticated to ensure user privacy.

In the exemplary setting illustrated in FIG. 1, the first mobile device depicted as device 126 and the second mobile device depicted as device 124 may detect that they are located in a region where the extent of available communication coverage is less than a pre-defined threshold. The first mobile device 126 in response to detecting an area of low or no coverage may trigger a device transmission mode, wherein the first mobile device 126 transmits device-related data comprising device location to other mobile device in its vicinity including the second mobile device 124, for forwarding the device-related data to a predetermined server or other receiver such as a BTS 114. The device location may be expressed in location coordinates. In one embodiment, the SPS element present in the mobile device is used to estimate the location coordinates of the mobile device. The device-related data may further comprise, but is not limited to location history, time-stamp, battery charge level, sensor measurements and data related to observed network parameters. Sensor measurements may include, but are not limited to data from one or more accelerometers or gyroscopes, and may help determine a movement of the device and/or predict a future position of the device. The first mobile device 126 may transmit the device related data to the other mobile devices using a short-range wireless communication technology. The first mobile device 126 may also encrypt the data to ensure user privacy before transmitting the data.

Similarly, in response to detecting an area of low or no coverage, the second mobile device 124 may trigger a device listening mode, wherein the second mobile device 124 listens for device-related data comprising device location from other mobile devices, for forwarding the device-related data to a BTS. The device related data may further comprise but is not limited to location history, time-stamp, battery charge level, sensor measurements or data related to observed network parameters. The second mobile device 124 stores the information locally on the device. The device-related data may be stored in the working memory 735 on a temporary basis or in one of the storage device(s) 725 on the mobile device.

Furthermore, in example embodiments, the second mobile device 124 may also communicate with a third mobile device 122 and so on. The second mobile device 124 may transfer the device-related data from the first mobile device 126 and/or the second mobile device 124 to the third mobile device 122. In some embodiments, the device-related data of the first mobile device 126 and/or the second mobile device 124 is stored in the working memory 735 and/or in the storage device(s) 725, for example in a collected data store. In this embodiment, any of the mobile devices 122, 124, 126 which enter an area of communication coverage may transmit device-related data from other mobile devices to the base transmission station.

In order to reduce the resources associated with data collection as described herein, various control mechanisms can be employed. For instance, a buffer can be allocated for collected data such that information is collected from other devices only up to a predefined maximum amount of information. Upon reaching the maximum, synchronization can cease, or other stored information can be selectively discarded to accommodate new information. Listening functionality may also be selectively activated based on, e.g., observed signal strength, user preferences, or the like.

The transmitting and receiving of the device-related data may be performed on the same device simultaneously on each of the mobile devices, resembling a synchronization operation of the device-related data between any two mobile devices.

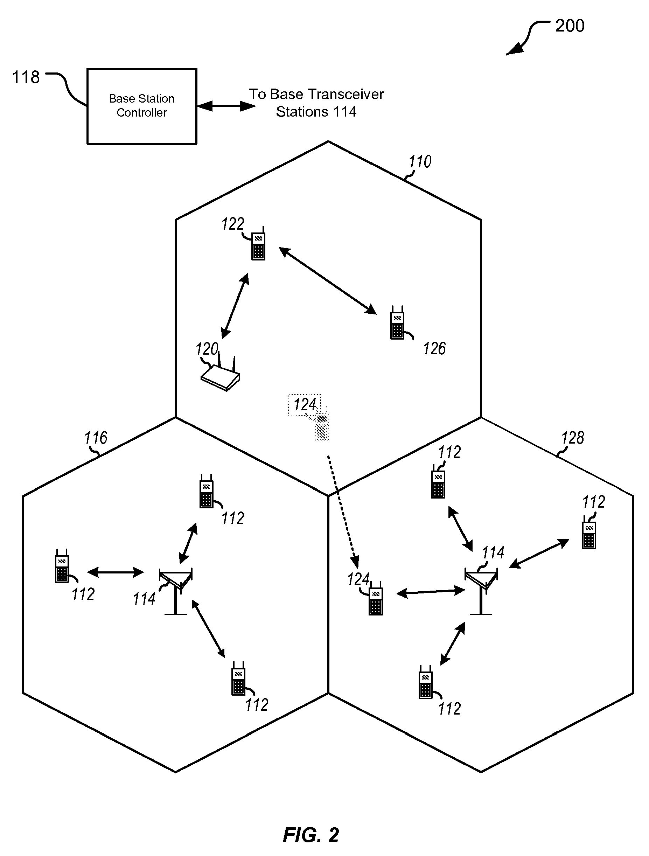

FIG. 2 is an illustration of a simplified wireless communication system 100 depicted in FIG. 1 at a later time. Comparing FIG. 2 to FIG. 1, in FIG. 2 the mobile device 124 has moved from an area of low or no cellular coverage 110 to an area of good cellular coverage 116. Upon reaching a location with good cellular coverage, the mobile device 124 identifies entry into an area having a communication coverage that is higher than a predetermined threshold and transmits information it has collected to the BTS 114 or other receiver, thereby enabling information about devices in low or no coverage areas to reach the network. This transfer may be automated such that the device automatically provides collected data to the predetermined receiver upon identifying a sufficient improvement in coverage.

By collecting and synthesizing data relating to a mobile device, a vector can be generated to determine a direction and/or speed of travel and aid a location server in estimating the position of the mobile device in the absence of direct reports from the mobile device. For instance, uploaded reports can include position data of a mobile device as well as position history, time stamps, etc., that enable a location server to synthesize reports from potentially multiple uploading devices for estimating the position of the mobile device. The BTS 114 receives the transmitted information from the mobile device 124. The BTS 114 or a server communicatively coupled to the BTS 114 determines a vector indicative of the movement of the first mobile device 126 based at least in part on the device-related data for the first mobile device 126 from the second mobile device 124. The determination of a vector indicating the movement of the first mobile device may take into account transmitted information from several mobile devices. The BTS 114 or a server coupled to BTS 114 may further estimate the location for the individual using the mobile device 126 based at least in part on the determined vector.

The BTS 114 or a server communicatively coupled to BTS 114 may transmit the location related device data to an emergency response entity. The BTS 114 may limit the number of transmissions to the emergency response entity. In one implementation, the transmission is triggered by the determination that a mobile device has not checked in for a time greater than a predetermined threshold.

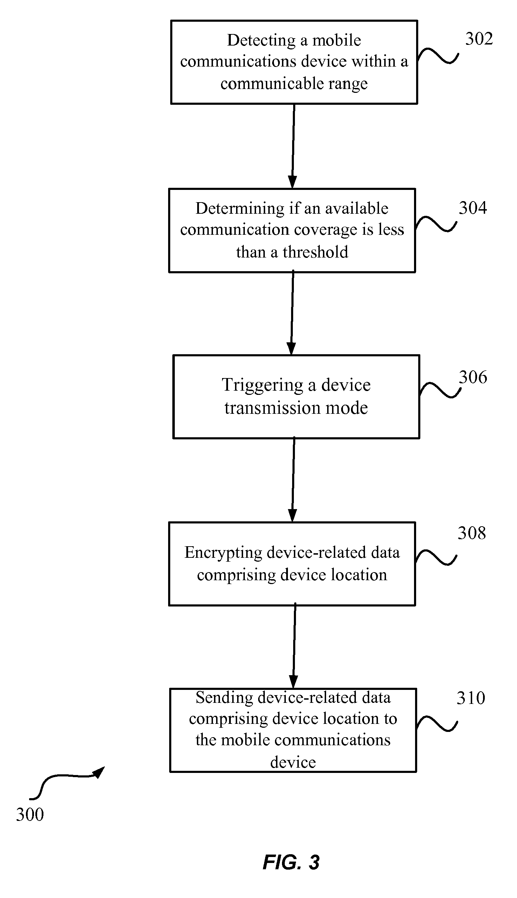

FIG. 3 is a simplified flow diagram, illustrating a method 300 for transmitting information to another mobile device for the purpose of forwarding to the network. The method 300 may be performed by processing logic that comprise hardware (circuitry, dedicated logic, etc.), software (such as is run on a general purpose computing system or a dedicated machine), firmware (embedded software), or any combination thereof. In one embodiment, the method 300 is performed by device 700 of FIG. 7. For example, as described below, in one implementation, blocks 302, 306 and 310 may be performed by computing logic and a transceiver in a communications subsystem 730 of FIG. 7 and blocks 304 and 308 may be performed by the processor 710. Furthermore, the device-related data may be stored at the storage device 725 and temporarily cached in the working memory 735.

Referring to FIG. 3, at block 302, the first mobile device detects a second mobile device within a communicable range using a communications subsystem 730 discussed further below. At block 304, the first mobile device determines that the available communication coverage is less than a threshold. In one embodiment, the processor 710 makes the determination of the available communication coverage. The communication coverage may be determined using various techniques such as determining a signal strength, calculating the error bit rate for the stream, calculating the SNR for the signal, receiving no response to an inquiry message, measuring the latency and/or bandwidth of supported test streams, or any other suitable techniques for determining communications coverage. In some implementations, the communications subsystem 730 of FIG. 7 demodulates the signal and determines the signal quality and the processor 710 determines if signal quality is less than a threshold.

In response to determining that the available communication coverage is less than a threshold, the mobile devices may automatically switch into a transmitting mode. However, in some implementations, the user of the mobile device may manually switch the phone into a transmitting mode and configure privacy settings. For instance, users entering unfamiliar areas or faced with an impending threat can manually activate the transmission mode in their mobile devices and subsequently send out device-related data. The mobile device may then transmit out device-related data to other mobile devices, for the purpose of forwarding the information to a predetermined server or other receiver such as a BTS 114.

At block 308, optionally, the first mobile device may also encrypt the data using one or more processors 710 to ensure user privacy before transmitting the data. At block 310, the first mobile device transmits device-related data comprising device location to mobile devices in the vicinity, for the purpose of forwarding the device-related data to a BTS once one of the receiving mobile devices reaches a location with good cellular coverage. The device location may be expressed in location coordinates. In one embodiment, the SPS element present in the mobile device is used to estimate the location coordinates of the mobile device. The device-related data may further comprise, but is not limited to location history, time-stamp, battery charge level, sensor measurements and data related to observed network parameters. Sensor measurements may include, but are not limited to data from one or more accelerometers or gyroscopes, and may help determine a movement of the device and/or predict a future position of the device. The mobile device may utilize a short range wireless transfer mechanisms such as Wi-Fi, and Bluetooth to communicate with other mobile devices in the vicinity.

It should be appreciated that the specific steps illustrated in FIG. 3 provide a particular method of switching between modes of operation, according to an embodiment of the present invention. Other sequences of steps may also be performed accordingly in alternative embodiments. For example, alternative embodiments of the present invention may perform the steps outlined above in a different order. Moreover, the individual steps illustrated in FIG. 3 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 300.

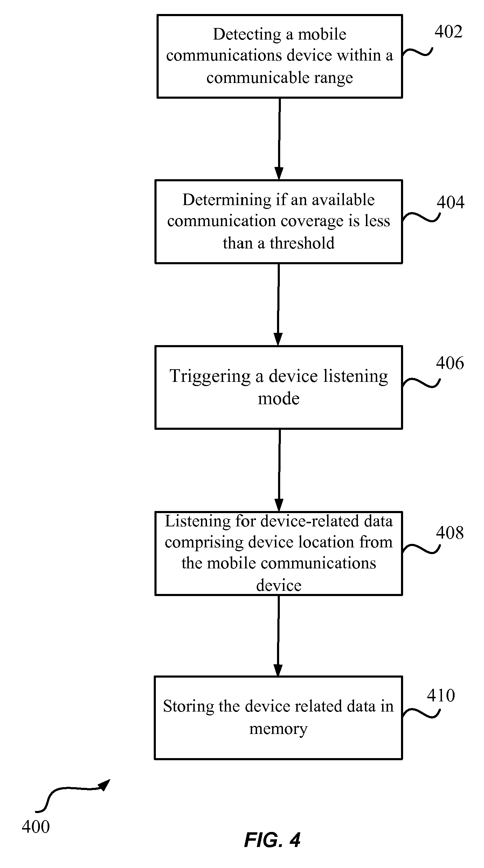

FIG. 4 is a simplified flow diagram, illustrating a method 400 for listening for information from another mobile device. The method 400 may be performed by processing logic that comprise hardware (circuitry, dedicated logic, etc.), software (such as is run on a general purpose computing system or a dedicated machine), firmware (embedded software), or any combination thereof. In one embodiment, the method 400 is performed by device 700 of FIG. 7. For example, as described below, in one implementation, blocks 402, 406, and 408 may be performed by computing logic and a transceiver in a communications subsystem 730 of FIG. 7, and block 404 may be performed by the processor 710. Furthermore, the device-related data may be stored at the storage device 725 and temporarily cached in the working memory 735, for example at block 410.

Referring to FIG. 4, at block 402, a mobile device detects another mobile device within a communicable range using a communications subsystem 730 discussed further below. At block 404, the mobile device determines if available communication coverage is less than a threshold. In response to determining that available communication coverage is less than the predetermined threshold, the mobile device may trigger a device listening mode, wherein the mobile device listens for device-related data comprising device location from other mobile devices, for forwarding the device-related data to a predetermined server or other receiver such as a BTS 114. (block 406). The device-related data may further comprise but is not limited to location history, time-stamp, battery charge level, sensor measurements or data related to observed network parameters. Sensor measurements may include, but are not limited to data from one or more accelerometers or gyroscopes, and may help determine a movement of the device and/or predict a future position of the device. At block 408, the listening device receives device-related data comprising device location from the mobile communications and stores the device related data in memory. The device-related data may be stored in the working memory 735 on a temporary basis or in one of the storage device 725 on the mobile device.

In order to reduce the resources associated with data collection as described herein, various control mechanisms can be employed. For instance, a buffer can be allocated for collected data such that information is collected from other devices only up to a predefined maximum amount of information. Upon reaching the maximum, synchronization can cease, or other stored information can be selectively discarded to accommodate new information. Listening functionality may also be selectively activated based on, e.g., observed signal strength, user preferences, or the like.

The transmitting and receiving of the device-related data may be performed on the same device simultaneously on each of the mobile devices, resembling a synchronization operation of the device-related data between any two or more mobile devices.

It should be appreciated that the specific steps illustrated in FIG. 4 provide a particular method of switching between modes of operation, according to an embodiment of the present invention. Other sequences of steps may also be performed accordingly in alternative embodiments. For example, alternative embodiments of the present invention may perform the steps outlined above in a different order. To illustrate, a user may choose to change from the third mode of operation to the first mode of operation, the fourth mode to the second mode, or any combination there between. Moreover, the individual steps illustrated in FIG. 4 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 400.

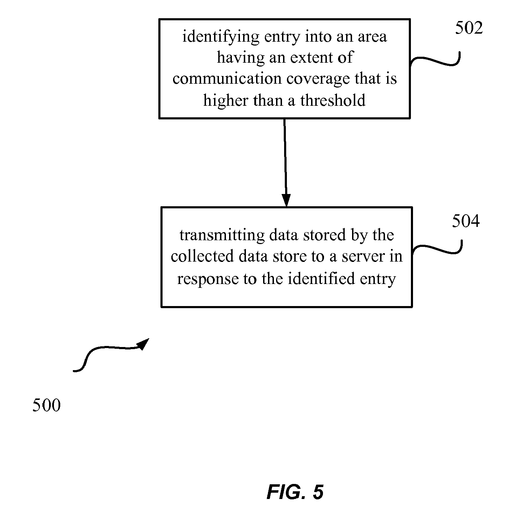

FIG. 5 is a simplified flow diagram, illustrating a method 500 for transmitting the stored device-related data from FIG. 4 to the network. The method 500 may be performed by processing logic that comprise hardware (circuitry, dedicated logic, etc.), software (such as is run on a general purpose computing system or a dedicated machine), firmware (embedded software), or any combination thereof. In one embodiment, the method 500 is performed by device 700 of FIG. 7. For example, in one implementation, either of blocks 502 and 504 may be performed by computing logic and a transceiver in a communications subsystem 730 of FIG. 7, and/or by the processor 710.

The mobile devices transfer device-related data from one mobile device to another while they are in an area of low or no cellular coverage. Briefly, refering back to FIG. 2, mobile device 124 moves from an area of low or no cellular coverage 110 to an area of good cellular coverage 128. When the mobile device 124 moves from the area of low or no cellular coverage it carries along with it device-related data for other devices in the low or no cellular coverage area. Similarly, in the flow described in FIG. 5, one or more of the plurality of mobile devices with device-related data for other mobile devices may move into an area having an extent of communication coverage that is higher than a threshold. At block 502, the mobile device with the stored device-related data for other mobile devices, identifies entry into an area having an extent of communication coverage that is higher than a threshold. At block 504, the mobile device transmits the data stored by the collected data store to a server in response to the identified entry. In some implementations, the user of the mobile device may provide input on their preference for forwarding device-related data to a predetermined server or other receiver such as a BTS 114 or not.

It should be appreciated that the specific steps illustrated in FIG. 5 provide a particular method of switching between modes of operation, according to an embodiment of the present invention. Other sequences of steps may also be performed accordingly in alternative embodiments. For example, alternative embodiments of the present invention may perform the steps outlined above in a different order. To illustrate, a user may choose to change from the third mode of operation to the first mode of operation, the fourth mode to the second mode, or any combination there between. Moreover, the individual steps illustrated in FIG. 5 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 500.

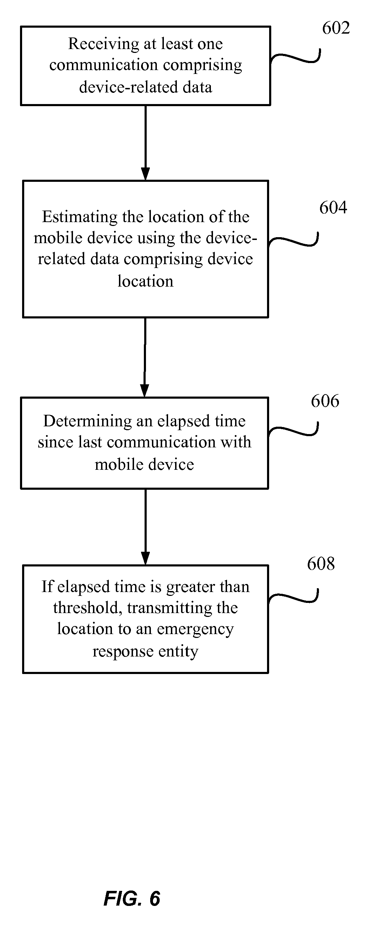

FIG. 6 is a simplified flow diagram, illustrating a method 600 for receiving the device-related data from the mobile device. The method 600 may be performed by processing logic that comprise hardware (circuitry, dedicated logic, etc.), software (such as is run on a general purpose computing system or a dedicated machine), firmware (embedded software), or any combination thereof. In one embodiment, the method 600 is performed by device 700 of FIG. 7. For example, in one implementation, blocks 602 and 608 may be performed by computing logic and a transceiver in a communications subsystem 730 of FIG. 7, and blocks 604 and 608 may be performed by the processor 710. Furthermore, the device-related data may be stored at the storage device 725 and temporarily cached in the working memory 735.

Once the devices from an area with low or no cellular coverage move to an area with good cellular coverage, they transmit device-related data for other devices to the BTS 114. As described in reference to FIG. 6, the first mobile device is a mobile device in an area of low or no cellular coverage, whereas the second mobile device is a mobile device that has moved from an area of low or no cellular coverage to an area of good coverage. Briefly referring to FIG. 2, mobile device 126 is an example of a first mobile device, whereas mobile device 124 is an example for a second mobile device that has moved from an area of low or no coverage to an area of good coverage.

In one implementation, the BTS 114 estimates the location of the first mobile device. In other implementations, the BTS 114 receives the device-related data associated with the first mobile device but forwards the data to a centralized server communicatively coupled to the BTS 114 for estimating the location of the mobile device. The first mobile device may be out of communication with the network and transmits its device-related data to a second mobile data for the purpose of forwarding to a BTS 114. At block 602, the BTS 114 receives at least one communication comprising device-related data associated with the first mobile device. The communication is received from a second mobile device (similar to 124 in FIG. 1 and FIG. 2) that moves from an area of low coverage to an area of good coverage. At block 604, the BTS 114 or a remote server estimates the location of the first mobile device using the device-related data comprising device location associated with the first mobile device.

In one implementation, estimating the location of the first mobile device comprises deriving a vector indicative of a movement of the first mobile device. The vector indicative of the movement of the first mobile device may be derived using device-related data such as location coordinates and time-stamps associated with the first mobile device. In another implementation, the BTS 114 or a remote server may estimate the location of the first mobile device by projecting the location of the device by determining a movement of the first mobile device using a plurality of location coordinates along with a time-stamp associated with each location coordinates from the device-related data associated with the first mobile device. The BTS 114 may receive multiple location coordinates along with respective time-stamps as part of the device-related data from one mobile or multiple mobile devices distinct from the first mobile device.

In yet another implementation, in addition to or in alternative to the above described mechanism, estimating the location of the first mobile device may comprise determining a movement of the device and/or predicting a future position of the device using the sensor measurements from the device-related data. Sensor measurements may include, but are not limited to, data from one or more accelerometers, and/or gyroscopes.

For example, a BTS 114 server may receive various device related data-points for a person hiking at 3 miles/hour on a substantially straight trail through the Appalachian mountains with very low communication coverage. The BTS 114 may receive a device related data-point for a device accompanying the hiker through a first fellow-hiker that corresponds to the location X at time x. In one implementation, the location X may comprise a longitude, latitude and altitude, and the time x may comprise the time at which the hiker was located at the longitude, latitude, and altitude. The BTS 114 may receive a second device related data-point through a second fellow-hiker with location coordinates Y at time y. Based on these two data-points, the BTS 114 server may estimate the hiker's approximate speed and direction, and/or determine a motion vector. Calculating the motion vector allows the BTS 114 server to project the location Z of the hiker at time z, wherein time z is some time after time x and time y. In some instances, the accuracy of the projection increases with the number of data-points and the proximity of the data points to the projection time.

At block 606, the BTS 114 or the server communicatively coupled to the BTS 114 determines an elapsed time since last communication with first mobile device. If the elapsed time is greater than a predetermined threshold the BTS 114 or the remote server may transmit the location of the first mobile device to an emergency response entity (block 608).

It should be appreciated that the specific steps illustrated in FIG. 6 provide a particular method of switching between modes of operation, according to an embodiment of the present invention. Other sequences of steps may also be performed accordingly in alternative embodiments. For example, alternative embodiments of the present invention may perform the steps outlined above in a different order. To illustrate, a user may choose to change from the third mode of operation to the first mode of operation, the fourth mode to the second mode, or any combination there between. Moreover, the individual steps illustrated in FIG. 6 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 600.

A computer system as illustrated in **FIG. 7** may be incorporated as part of the previously described computerized device. For example, computer system 700 can represent some of the components of a mobile device discussed in reference to the FIG. 1-6. A mobile device may be any computing device with an input sensory unit like a camera and a display unit. Examples of a mobile device include but are not limited to video game consoles, tablets, smart phones and mobile devices. Furthermore, computer system 700 can represent some of the components of the BTS 114 and any other remote or centralized server discussed herein. Fig. 7 provides a schematic illustration of one embodiment of a computer system 700 that can perform the methods provided by various other embodiments, as described herein, and/or can function as the host computer system, a remote kiosk/terminal, a point-of-sale device, a mobile device, a set-top box and/or a computer system. Fig. 7 is meant only to provide a generalized illustration of various components, any or all of which may be utilized as appropriate. Fig. 7, therefore, broadly illustrates how individual system elements may be implemented in a relatively separated or relatively more integrated manner.

The computer system 700 is shown comprising hardware elements that can be electrically coupled via a bus 705 (or may otherwise be in communication, as appropriate). The hardware elements may include one or more processors 710, including without limitation one or more general-purpose processors and/or one or more special-purpose processors (such as digital signal processing chips, graphics acceleration processors, and/or the like); one or more input devices 715, which can include without limitation a camera, a mouse, a keyboard and/or the like; and one or more output devices 720, which can include without limitation a display unit, a printer and/or the like.

The computer system 700 may further include (and/or be in communication with) one or more non-transitory storage devices 725, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data storage, including without limitation, various file systems, database structures, and/or the like.

The computer system 700 might also include a communications subsystem 730, which can include without limitation a modem, a network card (wireless or wired), an infrared communication device, a wireless communication device and/or chipset (such as a Bluetooth™ device, an 802.11 device, a WiFi device, a WiMax device, cellular communication facilities, etc.), and/or the like. The communications subsystem 730 may permit data to be exchanged with a network (such as the network described below, to name one example), other computer systems, and/or any other devices described herein. In some embodiments described herein, the communications subsystem 730 may be further categorized into a listening/receiver module for receiving data from other devices and the network and a transmission module for transmitting data to other devices and the network. In addition, the communication subsystem may also embody a SPS element or receiver for receiving signals from SPS satellites for determining the location of the computer system 700. In many embodiments, the computer system 700 will further comprise a non-transitory working memory 735, which can include a RAM or ROM device, as described above.

The computer system 700 also can comprise software elements, shown as being currently located within the working memory 735, including an operating system 740, device drivers, executable libraries, and/or other code, such as one or more application programs 745, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a computer-readable storage medium, such as the storage device(s) 725 described above. In some cases, the storage medium might be incorporated within a computer system, such as computer system 700. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the computer system 700 and/or might take the form of source and/or installable code, which, upon compilation and/or installation on the computer system 700 (e.g., using any of a variety of generally available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

Some embodiments may employ a computer system (such as the computer system 700) to perform methods in accordance with the disclosure. For example, some or all of the procedures of the described methods may be performed by the computer system 700 in response to processor 710 executing one or more sequences of one or more instructions (which might be incorporated into the operating system 740 and/or other code, such as an application program 745) contained in the working memory 735. Such instructions may be read into the working memory 735 from another computer-readable medium, such as one or more of the storage device(s) 725. Merely by way of example, execution of the sequences of instructions contained in the working memory 735 might cause the processor(s) 710 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 700, various computer-readable media might be involved in providing instructions/code to processor(s) 710 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 725. Volatile media include, without limitation, dynamic memory, such as the working memory 735. Transmission media include, without limitation, coaxial cables, copper wire and fiber optics, including the wires that comprise the bus 705, as well as the various components of the communications subsystem 730 (and/or the media by which the communications subsystem 730 provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of computer-readable media may be involved in carrying one or more sequences of one or more instructions to the processor(s) 710 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700. These signals, which might be in the form of electromagnetic signals, acoustic signals, optical signals and/or the like, are all examples of carrier waves on which instructions can be encoded, in accordance with various embodiments of the invention.

The communications subsystem 730 (and/or components thereof) generally will receive the signals, and the bus 705 then might carry the signals (and/or the data, instructions, etc. carried by the signals) to the working memory 735, from which the processor(s) 710 retrieves and executes the instructions. The instructions received by the working memory 735 may optionally be stored on a non-transitory storage device 725 either before or after execution by the processor(s) 710.

The methods, systems, and devices discussed above are examples. Various embodiments may omit, substitute, or add various procedures or components as appropriate. For instance, in alternative configurations, the methods described may be performed in an order different from that described, and/or various stages may be added, omitted, and/or combined. Also, features described with respect to certain embodiments may be combined in various other embodiments. Different aspects and elements of the embodiments may be combined in a similar manner. Also, technology evolves and, thus, many of the elements are examples that do not limit the scope of the disclosure to those specific examples.

Specific details are given in the description to provide a thorough understanding of the embodiments. However, embodiments may be practiced without these specific details. For example, well-known circuits, processes, algorithms, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the scope of the appended claims.

Also, some embodiments were described as processes depicted as flow diagrams or block diagrams. Although each may describe the operations as a sequential process, many of the operations can be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

Having described several embodiments, various modifications, alternative constructions, and equivalents may be used without departing from the scope of the appended claims. For example, the above elements may merely be a component of a larger system, wherein other rules may take precedence over or otherwise modify the application of the invention. Also, a number of steps may be undertaken before, during, or after the above elements are considered. Accordingly, the above description does not limit the scope of the disclosure.

## Claims

1. A method comprising:
determining whether a listening mode has been triggered in a mobile apparatus (124), wherein the listening mode is triggered when an extent of cellular coverage at the mobile apparatus (124) is less than a threshold;
in response to the triggering of the listening mode, the mobile apparatus (124) listening for data using a short range wireless transfer mechanism;
determining whether a transmission mode has been triggered in a device (126), wherein the transmission mode is triggered when the extent of cellular coverage at the device (126) is less than said threshold; and
in response to the triggering of the transmission mode, the device (126) using the short range wireless transfer mechanism to transmit data comprising a location, from the device (126) to the mobile apparatus (124), for forwarding the data to a base transmission station (114).

2. The method of claim 1, wherein the location comprises a current location of the device (126).

3. The method of claim 1, wherein the location comprises a location of a second mobile apparatus that was previously received by the device (126).

4. The method of claim 1 wherein the data further comprises one or more of location history, or network parameters.

5. The method of claim 1 wherein the data is encrypted prior to transmitting to the mobile apparatus.

6. The method of claim 1 wherein the listening comprises:
receiving the data from the device (126); and
storing data in a collected data store.

7. The method of claim 6 further comprising:
identifying entry into an area having an extent of communication coverage that is higher than the threshold; and
transmitting data stored by the collected data store to a server in response to the identified entry.

8. The method of claim 1 further comprising:
receiving at least one communication comprising said data, wherein the at least one communication is received from the mobile apparatus (124); and
estimating a location of the device (126) using said data.

9. The method of claim 8 wherein estimating the location of the device comprises deriving a vector indicative of a movement of the device (126) based at least in part on the at least one communication.

10. The method of claim 8 wherein estimating the location of the device comprises projecting the location of the device (126) by determining a movement of the device (126) using a plurality of location coordinates along with a time-stamp associated with each location coordinate from at least said data.

11. The method of claim 8 further comprising transmitting the location to an emergency response entity.

12. The method of claim 11 further comprising determining an elapsed time since a most recent communication with the device (126) is greater than a first threshold, wherein the transmitting is triggered by the determination that the elapsed time is greater than the first threshold.

13. A non-transitory computer readable storage medium coupled to a processor, wherein the non-transitory computer readable storage medium comprises instructions executable by the processor for implementing the method of any one of claims 1-12.

14. A mobile device (126) comprising:
a transmission module for transmitting device-related data comprising device location to another mobile device (124) via a short range wireless transfer mechanism, for forwarding the device-related data to a base transmission station (114), wherein the transmission is triggered when an extent of cellular coverage is less than a threshold; and
a listening module for listening for device-related data comprising device location from another mobile device via said short range wireless transfer mechanism, for forwarding the device-related data to a base transmission station (114), wherein the listening is triggered when the extent of cellular coverage is less than said threshold.

15. The mobile device (126) of claim 14, wherein the device-related data comprising device location, listened for by the listening module, comprises a location of a mobile device that was previously received by the another mobile device that the listening module is listening for device-related data from.

## Patentansprüche

1. Verfahren, das Folgendes beinhaltet:
Ermitteln, ob ein Horchmodus in einem Mobilapparat (124) ausgelöst werden soll, wobei der Horchmodus dann ausgelöst wird, wenn ein Ausmaß an Mobilfunkabdeckung an dem Mobilapparat (124) kleiner ist als ein Schwellenwert;
Horchen, durch den Mobilapparat (124), als Reaktion auf die Auslösung des Horchmodus, auf Daten mit einem drahtlosen Kurzstreckenübertragungsmechanismus;
Ermitteln, ob ein Sendemodus in einem Gerät (126) ausgelöst wurde, wobei der Sendemodus dann ausgelöst wird, wenn das Ausmaß an Mobilfunkabdeckung an dem Gerät (126) kleiner ist als der genannte Schwellenwert; und
Benutzen, durch das Gerät (126), als Reaktion auf die Auslösung des Sendemodus, des drahtlosen Kurzstreckenübertragungsmechanismus zum Senden von Daten, die einen Ort umfassen, von dem Gerät (126) zu dem Mobilapparat (124), zum Weiterleiten der Daten zu einer Basissendestation (114).

2. Verfahren nach Anspruch 1, wobei der Ort einen aktuellen Ort des Geräts (126) umfasst.

3. Verfahren nach Anspruch 1, wobei der Ort einen Ort eines zweiten Mobilapparats umfasst, der zuvor von dem Gerät (126) empfangen wurde.

4. Verfahren nach Anspruch 1, wobei die Daten ferner eines oder mehrere aus Ortshistorie oder Netzwerkparameter umfassen.

5. Verfahren nach Anspruch 1, wobei die Daten vor dem Senden zum Mobilapparat verschlüsselt werden.

6. Verfahren nach Anspruch 1, wobei das Horchen Folgendes beinhaltet:
Empfangen der Daten von dem Gerät (126); und
Speichern von Daten in einem Gesammelte-Daten-Speicher.

7. Verfahren nach Anspruch 6, das ferner Folgendes beinhaltet:
Identifizieren des Eintritts in einen Bereich mit einem Ausmaß an Kommunikationsabdeckung, das höher ist als der Schwellenwert; und
Senden von in dem Gesammelte-Daten-Speicher gespeicherten Daten zu einem Server als Reaktion auf den identifizierten Eintritt.

8. Verfahren nach Anspruch 1, das ferner Folgendes beinhaltet:
Empfangen von wenigstens einer die genannten Daten umfassenden Kommunikation, wobei die wenigstens eine Kommunikation von dem Mobilapparat (124) empfangen wird; und
Schätzen eines Orts des Gerätes (126) anhand der genannten Daten.

9. Verfahren nach Anspruch 8, wobei das Schätzen des Orts des Geräts das Ableiten eines Vektors, der eine Bewegung des Geräts (126) anzeigt, wenigstens teilweise auf der Basis der wenigstens einen Kommunikation beinhaltet.

10. Verfahren nach Anspruch 8, wobei das Schätzen des Orts des Geräts das Projizieren des Orts des Geräts (126) durch Ermitteln einer Bewegung des Geräts (126) anhand von mehreren Ortskoordinaten zusammen mit einem Zeitstempel in Assoziation mit jeder Ortskoordinate von wenigstens den genannten Daten beinhaltet.

11. Verfahren nach Anspruch 8, das ferner das Senden des Orts zu einer Notfalleinsatzentität beinhaltet.

12. Verfahren nach Anspruch 11, das ferner das Ermitteln einer Zeit beinhaltet, die verstrichen ist, seitdem eine jüngste Kommunikation mit dem Gerät (126) größer ist als ein erster Schwellenwert, wobei das Senden durch die Feststellung ausgelöst wird, dass die verstrichene Zeit größer ist als der erste Schwellenwert.

13. Nichtflüchtiges computerlesbares Speichermedium, das mit einem Prozessor gekoppelt ist, wobei das nichtflüchtige computerlesbare Speichermedium Befehle umfasst, die von dem Prozessor zum Implementieren des Verfahrens nach einem der Ansprüche 1-12 ausgeführt werden können.

14. Mobilgerät (126), das Folgendes umfasst:
ein Sendemodul zum Senden von gerätebezogenen Daten, die einen Geräteort umfassen, zu einem anderen Mobilgerät (124) über einen drahtlosen Kurzstreckenübertragungsmechanismus, zum Weiterleiten der gerätebezogenen Daten zu einer Basissendestation (114), wobei das Senden dann ausgelöst wird, wenn ein Ausmaß an Mobilfunkabdeckung kleiner ist als ein Schwellenwert; und
ein Horchmodul zum Horchen auf gerätebezogene Daten, umfassend einen Geräteort von einem anderen Mobilgerät über den genannten drahtlosen Kurzstreckenübertragungsmechanismus, zum Weiterleiten der gerätebezogenen Daten zu einer Basissendestation (114), wobei das Horchen dann ausgelöst wird, wenn das Ausmaß an Mobilfunkabdeckung kleiner ist als der genannte Schwellenwert.

15. Mobilgerät (126) nach Anspruch 14, wobei die gerätebezogenen Daten einen Geräteort umfassen, auf den das Horchmodul gehorcht hat, umfassend einen Ort eines Mobilgeräts, das zuvor von dem anderen Mobilgerät empfangen wurde, auf das das Horchmodul in Bezug auf gerätebezogene Daten gehorcht hat.

## Revendications

1. Procédé comprenant :
la détermination qu'un mode d'écoute a été déclenché ou non dans un appareil mobile (124), dans lequel le mode d'écoute est déclenché quand une étendue de couverture cellulaire au niveau de l'appareil mobile (124) est inférieure à un seuil ;
en réponse au déclenchement du mode d'écoute, l'écoute par l'appareil mobile (124) à la rechercher de données en utilisant un mécanisme de transfert sans fil de courte portée ;
la détermination qu'un mode de transmission a été déclenché ou non dans un dispositif (126), dans lequel le mode de transmission est déclenché quand l'étendue de couverture cellulaire au niveau du dispositif (126) est inférieur audit seuil ; et
en réponse au déclenchement du mode de transmission, l'utilisation par le dispositif (126) du mécanisme de transfert sans fil de courte portée pour transmettre des données comprenant un emplacement, par le dispositif (126) à l'appareil mobile (124), afin d'acheminer les données à une station de transmission de base (114).

2. Procédé selon la revendication 1, dans lequel l'emplacement comprend un emplacement actuel du dispositif (126).

3. Procédé selon la revendication 1, dans lequel l'emplacement comprend un emplacement d'un second appareil mobile qui a été précédemment reçu par le dispositif (126).

4. Procédé selon la revendication 1, dans lequel les données comprennent en outre l'un ou plusieurs d'un historique de position ou de paramètres réseau.

5. Procédé selon la revendication 1 dans lequel les données sont cryptées avant leur transmission à l'appareil mobile.

6. Procédé selon la revendication 1 dans lequel l'écoute comprend :
la réception des données depuis le dispositif (126) ; et
la mémorisation des données dans une mémoire de données collectées.

7. Procédé selon la revendication 6 comprenant en outre :
l'identification d'une entrée dans une zone ayant une étendue de couverture de communication supérieure au seuil ; et
la transmission de données mémorisées par la mémoire de données collectées à un serveur en réponse à l'entrée identifiée.

8. Procédé selon la revendication 1 comprenant en outre :
la réception d'au moins une communication comprenant lesdites données, dans lequel l'au moins une communication est reçue depuis l'appareil mobile (124) ; et
l'estimation d'un emplacement du dispositif (126) au moyen desdites données.

9. Procédé selon la revendication 8 dans lequel l'estimation de l'emplacement du dispositif comprend la dérivée d'un vecteur indicatif d'un mouvement du dispositif (106) en fonction au moins en partie de l'au moins une communication.

10. Procédé selon la revendication 8 dans lequel l'estimation de l'emplacement du dispositif comprend la projection de l'emplacement du dispositif (126) en déterminant un mouvement du dispositif (126) au moyen d'une pluralité de coordonnées d'emplacement ainsi que d'une estampille temporelle associée à chaque coordonnée d'emplacement d'au moins lesdites données.

11. Procédé selon la revendication 8 comprenant en outre la transmission de l'emplacement à une entité de réponse d'urgence.

12. Procédé selon la revendication 11 comprenant en outre la détermination qu'un temps écoulé depuis la communication la plus récente avec le dispositif (126) est supérieur à un premier seuil, dans lequel la transmission est déclenchée par la détermination que le temps écoulé est supérieur au premier seuil.

13. Support de mémorisation non transitoire lisible par ordinateur couplé à un processeur, le support de mémorisation non transitoire lisible par ordinateur comprenant des instructions exécutables par le processeur pour mettre en ouvre le procédé selon l'une quelconque des revendications 1 à 12.

14. Dispositif mobile (126) comprenant :
un module de transmission pour transmettre des données de dispositif comprenant un emplacement de dispositif à un autre dispositif mobile (124) par l'intermédiaire d'un mécanisme de transfert sans fil de courte portée, afin d'acheminer les données de dispositif à une station de transmission de base (114), dans lequel la transmission est déclenchée quand une étendue de couverture cellulaire est inférieure à un seuil ; et
un module d'écoute pour écouter les données de dispositif comprenant un emplacement de dispositif d'un autre dispositif mobile par l'intermédiaire dudit mécanisme de transfert sans fil de courte portée, afin d'acheminer les données de dispositif à une station de transmission de base (114), dans lequel l'écoute est déclenchée quand l'étendue de la couverture cellulaire est inférieure audit seuil.

15. Dispositif mobile (126) selon la revendication 14, dans lequel les données de dispositif comprenant un emplacement de dispositif, écoutées par le module d'écoute, comprennent un emplacement d'un dispositif mobile qui a été précédemment reçu par l'autre dispositif mobile écouté par le module d'écoute à la recherche de données de dispositif.
